# EUROPÄISCHE PATENTSCHRIFT

(11) **EP 1 325 290 B1**
(45) Veröffentlichungstag und Bekanntmachung des Hinweises auf die Patenterteilung: **09.12.2015**
(21) Anmeldenummer: 01969129.4
(22) Anmeldetag: 04.10.2001
(51) Int. Cl.: G01N 35/00, G01G 13/285, C40B 60/14, B01J 19/00, G01G 17/06

(54) **VORRICHTUNG MIT EINER DOSIEREINRICHTUNG**
DEVICE COMPRISING A DOSING UNIT
DISPOSITIF COMPORTANT UNE UNITE DE DOSAGE

(30) Priorität: 06.10.2000 CH 198000
(43) Veröffentlichungstag der Anmeldung: 09.07.2003
(73) Patentinhaber: Chemspeed Technologies AG, 4302 Augst (CH)
(72) Erfinder: GÜLLER, Rolf, CH-5027 Herznach (CH); SCHRÖER, Josef, CH-4132 Muttenz (CH); FRANK, Paul, CH-6373 Ennetbürgen (CH); METZGER, Franz, CH-4055 Basel (CH); BACHMANN, Christoph, CH-4415 Lausen (CH)
(74) Vertreter: Bohest AG
(86) Internationale Anmeldenummer: PCT/CH2001/000601
(87) Internationale Veröffentlichungsnummer: WO 2002/029371

(56) Entgegenhaltungen:
- EP-A- 0 655 611
- WO-A-92/14126
- DE-A- 3 617 595
- DE-A- 19 730 034
- DE-A1- 4 434 710
- US-A- 4 805 673
- US-A- 5 738 153

## Beschreibung

Die vorliegende Erfindung bezieht sich auf eine Vorrichtung mit einer Dosiereinrichtung zum dosierten Abgeben einer Substanz, wie sie im Oberbegriff des unabhängigen Patentanspruchs 1 definiert ist.

Die Dosierung des Zugebens von Substanzen in Behälter erfolgt in vielen Fällen durch Aufsetzen des zu befüllenden Behälters auf eine Waage und Wägen desselben während des Befüllens.

Wenn dies nicht möglich ist, wird die Substanz in einem ersten Schritt dosiert einem Zwischenbehälter zugegeben, der auf eine Waage aufgesetzt wird. Anschliessend muss dieser Zwischenbehälter vollständig in den zu befüllenden Behälter entleert werden. Als Alternative dazu werden Wägepapiere eingesetzt, die die Funktion des Zwischenbehälters übernehmen.

Problematisch bei diesem Vorgehen ist, dass die Substanz im Zwischenbehälter oder auf dem Wägepapier oft nicht vollständig in den zu befüllenden Behälter entleert wird. Beispielsweise können kleine Restmengen an den Wänden kleben bleiben oder es können, wenn es sich bei der Substanz um eine Flüssigkeit handelt, Tropfen an Oberflächen hängen bleiben. Dies erfordert eine zweite Wägung des entleerten Zwischenbehälters oder des Wägepapiers, wobei die dosierte Menge der Substanz durch Bildung der Differenz der beiden Wägungen ermittelt wird.

In der DE 40 02 255 A1 ist eine fest montierte Vorrichtung zum Dosieren von Flüssigkeiten durch Abgabe aus mindestens einem mit einem Flüssigkeitsvorrat verbundenen Dosierventil offenbart, die eine Hauptwaage aufweist, auf der ein Behälter zur Aufnahme von Flüssigkeit positioniert werden kann. Diese Hauptwaage hat einen grossen Wiegebereich von beispielsweise mehreren Tonnen und daher eine verhältnismässig geringe Genauigkeit von beispielsweise ± 100 g. Zwischen Dosierventil und Flüssigkeitsvorrat ist ein Pufferbehälter vorhanden, dessen Gewicht mittels einer Feinwaage feststellbar ist und der zur Abgabe kleiner Flüssigkeitsmengen aus dem Dosierventil gegenüber dem Flüssigkeitsvorrat abdichtbar ist. Mit der Feinwaage kann das Gewicht des Pufferbehälters und der darin vorhandenen Flüssigkeit gemäss Offenbarung mit einer Genauigkeit von beispielsweise ± 0,1 g gemessen und daraus die abgegebene Flüssigkeitsmenge bestimmt werden. Die Genauigkeit des Gewichts der abgegebenen Flüssigkeitsmenge ist einerseits dadurch beschränkt, dass der Pufferbehälter über flexible Leitungen mit dem Vorratsbehälter und mit dem Dosierventil verbunden ist, was die Messung beeinträchtigt, und anderseits dadurch, dass die Flüssigkeit nicht direkt vom Pufferbehälter abgegeben wird, sondern zuerst über eine Leitung zum Dosierventil, welches nicht gewogen wird, gelangt und erst von diesem abgegeben wird. Ausserdem verhindert der aufwendige Aufbau mit Vorratsbehälter, Pufferbehälter und Dosierventil, die über Leitungen verbunden sind, praktisch die Dosiervorrichtung mobil auszubilden bzw. an einem Roboterarm oder Linearachsensystem anzubringen.

Die DE 36 17 595 A1 offenbart eine Vorrichtung zum Dosieren von Schüttgut, bei der ein Wägebehälter mit dem zu dosierenden Schüttgut an einer Gewichtsmessdose aufgehängt ist und seitlich mit flexiblen Verstrebungen versehen ist. Der Wägebehälter ist während des Wägens neben der Waage auch mit den Verstrebungen in Berührung, was die Wägegenauigkeit beeinträchtigt.

In der WO 92/14126 ist eine Dosiervorrichtung beschrieben, bei der ein Behälter mit zu dosierendem Schüttgut auf einer Wägezelle angeordnet ist. Die Dosiervorrichtung umfasst innerhalb des Behälters einen mit Wasser gefüllten Faltenbalg, der über eine Wasserleitung mit einem ausserhalb des Behälters angeordneten Faltenbalg in Verbindung steht. Der ausserhalb angeordnete Faltenbalg wird von der Wägezelle nicht und die Wasserleitung wird nur teilweise gewogen und die Dosiervorrichtung ist somit während des Wägens nicht nur mit der Waage in Berührung, was die Wägegenauigkeit beeinträchtigt.

In der DE 197 30 034 A1 ist eine Vorrichtung zur Dosierung von fliessfähigen Stoffen offenbart, bei der ein Behälter mit einem fliessfähigen Stoff auf einer Wage angeordnet ist. Die Entleerung erfolgt über ein Steigrohr, indem der Behälter mit dem fliessfähigen Stoff und die Waage in einem Druckbehälter mit Druck eines Inertgases beaufschlagt werden oder alternativ mit Hilfe einer Pumpe. Über das Steigrohr erreicht der fliessfähige Stoff ein Ventil und schliesslich einen Spritzroboter. Die Dosiervorrichtung wird auch hier nicht ganz gewogen und Teile von ihr stehen während des Wägens mit Teilen ausserhalb der Waage in Berührung.

Aus der US 5 738 153 A ist eine Dosiereinrichtung mit einem Füllbehälter bekannt, der ohne Schrauben zu lösen vom Rest der Dosiereinrichtung abnehmbar und wieder an diesen anbringbar ist. Gewogen wird der Zielbehälter, nicht die Dosiereinrichtung mit dem Füllbehälter.

Die EP 0 655 611 A1 offenbart eine Vorrichtung zum Dosieren von Schüttgut, bei der ein Behälter mit dem zu dosierenden Schüttgut auf einem fest verankerten Wiegerahmen, auf dem mindestens eine Druckmessdose befestigt ist, angeschraubt ist. Die mindestens eine Druckmessdose ermittelt Gewichtsänderungen des Systems, wobei die Dosiervorrichtung während des Ermittelns des Gewichts mit nicht gewogenen Teilen in Berührung ist.

In der DE 44 34 710 A1 ist eine Wiege- und Dosiervorrichtung offenbart, bei der die Dosiereinrichtung während des Abgebens von Substanz von der Waage entkoppelt ist.

Die US 4 805 673 A offenbart eine Vorrichtung mit einer Dosiereinrichtung zum dosierten Abgeben einer Substanz, die an einer Waage angeordnet ist, so dass die Waage das Gewicht der Dosiereinrichtung misst. Die Dosiereinrichtung umfasst einen fest integrierten, abzugebende Substanz enthaltenden Vorratsbehälter, eine Dosiereinheit und eine Antriebseinheit.

Angesichts der Nachteile der oben beschriebenen Vorrichtungen des Standes der Technik liegt der Erfindung die Aufgabe zugrunde, eine Vorrichtung zu schaffen, mit der das dosierte Zugeben einer gewünschten Substanzmenge in einen Behälter vereinfacht möglich sein soll, ohne dass dabei ein Zwischenbehälter oder ein Wägepapier eingesetzt werden muss.

Diese Aufgabe wird durch die erfindungsgemässe Vorrichtung gelöst, wie sie im unabhängigen Patentanspruch 1 definiert ist. Bevorzugte Ausführungsvarianten ergeben sich aus den abhängigen Patentansprüchen.

Das Wesen der Erfindung besteht im Folgenden: Eine Vorrichtung weist eine Dosiereinrichtung zum dosierten Abgeben einer Substanz und eine Waage, mit der die Menge an abgegebener Substanz ermittelbar ist, auf. Die Dosiereinrichtung umfasst einen abzugebende Substanz enthaltenden Vorratsbehälter, eine den Vorratsbehälter umfassende Dosiereinheit und eine Antriebseinheit und ist an der Waage angeordnet, so dass die Waage das Gewicht der Dosiereinrichtung misst. Erfindungsgemäss ist die Dosiereinheit ohne Schrauben zu lösen von der Antriebseinheit abnehmbar und wieder an diese anbringbar ist oder der Vorratsbehälter ist so angeordnet, dass er ohne Schrauben zu lösen vom Rest der Dosiereinrichtung abnehmbar und wieder an diesen anbringbar ist.

Dadurch, dass die Waage das Gewicht der Dosiereinrichtung mit Vorratsbehälter inklusive Substanz misst, kann die Menge an abgegebener Substanz mittels Differenzbildung genau bestimmt werden. Allfällige an der Dosiereinrichtung hängengebliebene Substanzreste beeinträchtigen die exakte Messung der zudosierten Substanz nicht. Auf eine Abgabe der Substanz in einen Zwischenbehälter oder auf ein Wägepapier und ein Wägen des Zwischenbehälters oder des Wägepapiers durch Aufsetzen auf eine Waage kann verzichtet werden. Das dosierte Abgeben von Substanz kann direkt in beliebige Behälter erfolgen, ohne dass diese Behälter auf eine Waage aufgesetzt zu werden brauchen. Somit kann z.B. auch in untereinander mit Schläuchen verbundene Behälter oder in Behälter, deren Gewicht das Aufsetzen auf eine Waage nicht erlaubt, exakt zudosiert werden.

Als Waage kann z.B. eine Waage mit im Minimum einem Wägebereich von 0 bis 2 kg und einer Genauigkeit von 0,1 g verwendet werden. Solche Waagen sind beispielsweise bei der Firma Sartorius AG, 37070 Göttingen, Deutschland, erhältlich. Vorzugsweise wird jedoch eine genauere Waage mit einer Genauigkeit von 0,1 mg verwendet.

Dadurch, dass die Dosiereinheit ohne Schrauben zu lösen von der Antriebseinheit abnehmbar und wieder an diese anbringbar ist oder der Vorratsbehälter so angeordnet ist, dass er ohne Schrauben zu lösen vom Rest der Dosiereinrichtung abnehmbar und wieder an diesen anbringbar ist, können verschiedene Substanzen in mehreren Dosiereinheiten bzw. Vorratsbehältern vorbereitet werden und nacheinander mit der gleichen Antriebseinheit bzw. mit dem gleichen Rest der Dosiereinrichtung dosiert werden. Die Handhabung der Dosiereinheiten bzw. der Vorratsbehälter kann manuell oder automatisch erfolgen.

Vorzugsweise führt die Dosiereinrichtung die abzugebende Substanz vollständig mit sich mit. Sie muss so nicht, beispielsweise über Schläuche, alimentiert werden, was die Wägegenauigkeit beeinträchtigen würde.

Bei einem bevorzugten Ausführungsbeispiel ist die Dosiereinrichtung so an der Waage angeordnet, dass die Dosiereinrichtung ohne Schrauben zu lösen von der Waage abnehmbar und wieder an diese anbringbar ist, insbesondere durch Abheben und wieder Aufsetzen. Dadurch können auf einfache Weise verschiedenartige Dosiereinrichtungen eingesetzt werden, um z.B. Flüssigkeiten oder feste Substanzen nacheinander zu dosieren. Die Handhabung der Dosiereinrichtungen kann manuell oder automatisch erfolgen.

Mit Vorteil ist die Dosiereinheit durch Abheben und wieder Aufsetzen von der Antriebseinheit abnehmbar und wieder an diese anbringbar.

Vorzugsweise ist der Vorratsbehälter durch Abheben und wieder Aufsetzen vom Rest der Dosiereinrichtung abnehmbar und wieder an diesen anbringbar ist.

Bei einem vorteilhaften Ausführungsbeispiel ist die Dosiereinrichtung eine Einrichtung zur Dosierung von Flüssigkeit.

Bei einem anderen vorteilhaften Ausführungsbeispiel ist die Dosiereinrichtung eine Einrichtung zur Dosierung von pulverförmiger Substanz.

Vorzugsweise weist die Dosiereinrichtung einen Extruder auf, insbesondere einen Extruder mit einem Schneckenteil. Dies ermöglicht ein exaktes Dosieren von pulverförmiger Substanz.

Mit Vorteil weist die Dosiereinrichtung einen Motor und mindestens einen Akku zur Speisung des Motors auf. Die Dosiereinrichtung kann so unabhängig vom Rest der Vorrichtung betrieben werden, d.h. es ist keine Stromleitung vom Rest der Vorrichtung zur Dosiereinrichtung notwendig, so dass die Wägung nicht beeinträchtigt wird.

Im Folgenden wird die erfindungsgemässe Vorrichtung unter Bezugnahme auf die beigefügten Zeichnungen anhand eines Ausführungsbeispiels detaillierter beschrieben. Es zeigen:
- Fig. 1 -: eine erfindungsgemässe Vorrichtung mit einer über eine Haltestange an einem Gestell angebrachten Wägeeinheit und einer Dosiereinrichtung beim Befüllen von Behältern;
- Fig. 2 -: ein Bündel von mit Schläuchen verbundenen Behältern;
- Fig. 3 -: die von der Haltestange abgenommene Wägeeinheit und die Dosiereinrichtung mit Dosiereinheit und Antriebseinheit der Vorrichtung von Fig. 1 im Detail;
- Fig. 4 -: die Wägeeinheit von Fig. 3;
- Fig. 5 -: die Dosiereinheit der Dosiereinrichtung von Fig. 3 in einer Perspektivansicht;
- Fig. 6 -: die Dosiereinheit der Dosiereinrichtung von Fig. 3 in einer Explosionsansicht; und
- Fig. 7 -: die Antriebseinheit der Dosiereinrichtung von Fig. 3.

### Figuren 1 und 2

Die dargestellte erfindungsgemässe Vorrichtung umfasst ein Gestell 402, an dem über eine Haltestange 401 eine Wägeeinheit 420 befestigt ist. An der Wägeeinheit 420 ist eine Dosiereinrichtung 400 abhebbar angebracht. Die Wägeeinheit 420 und die Dosiereinrichtung 400 werden von einem Computer 403 mit Datenübertragungs-Kabel 414 gesteuert. Mit der Dosiereinrichtung 400 werden nacheinander mehrere Behälter 1 jeweils mit einer exakt dosierten Substanzmenge befüllt, wobei die Behälter 1 hierzu unter der Dosiereinrichtung 400 verschoben werden. Alternativ könnten auch die Wägeeinheit 420 und die Dosiereinrichtung 400 verstellbar an einem Linearachsensystem angebracht sein.

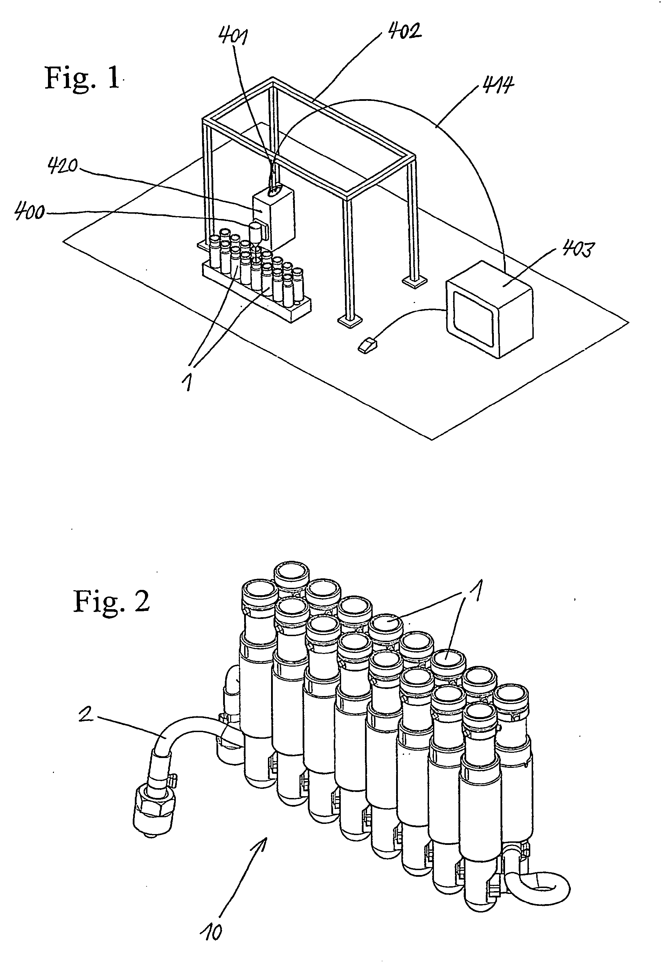

Mit der Vorrichtung gemäss Fig. 1 kann auch jedem einzelnen Behälter 1 eines Bündels 10 von mit Schläuchen 2 verbundenen Behältern gemäss Fig. 2 eine exakte Menge an Substanz zudosiert werden. Dies wäre durch Wägen der Behälter 1 durch Aufsetzen auf eine Waage nicht möglich, da diese miteinander verbunden sind.

### Figuren 3 bis 7

Bei dem vorliegenden Ausführungsbeispiel ist die Wägeeinheit 420 über eine Bajonettverschlussverbindung mit der Haltestange 401 verbindbar. Die Bajonettverschlussverbindung umfasst haltestangenseitig ein ringförmiges Verbindungsteil 411 mit einem Verbindungsbolzen 412 und wägeeinheitseitig ein ringförmiges Verbindungsteil 421 mit einer Ausnehmung 422 zur Aufnahme des Verbindungsbolzens 412. Ausserdem ist wägeeinheitseitig ein Dorn 424 angeordnet, der zum Eingriff in das ringförmige Verbindungsteil 411 bestimmt ist und die Bajonettverschlussverbindung stabilisiert.

Über acht über den Aussenumfang verteilte Kontaktstellen 413 am haltestangenseitigen ringförmigen Verbindungsteil 411 und acht entsprechend über den Innenumfang verteilte Kontaktstellen 423 am wägeeinheitseitigen ringförmigen Verbindungsteil 421 kann die Wägeeinheit 420 über das ringförmige Verbindungsteil 411 mit Strom versorgt werden und es kann eine gegenseitige Datenkommunikation stattfinden. Das ringförmige Verbindungsteil 411 seinerseits steht über das Kabel 414 mit dem Computer 403 (s. Fig. 1) in Verbindung.

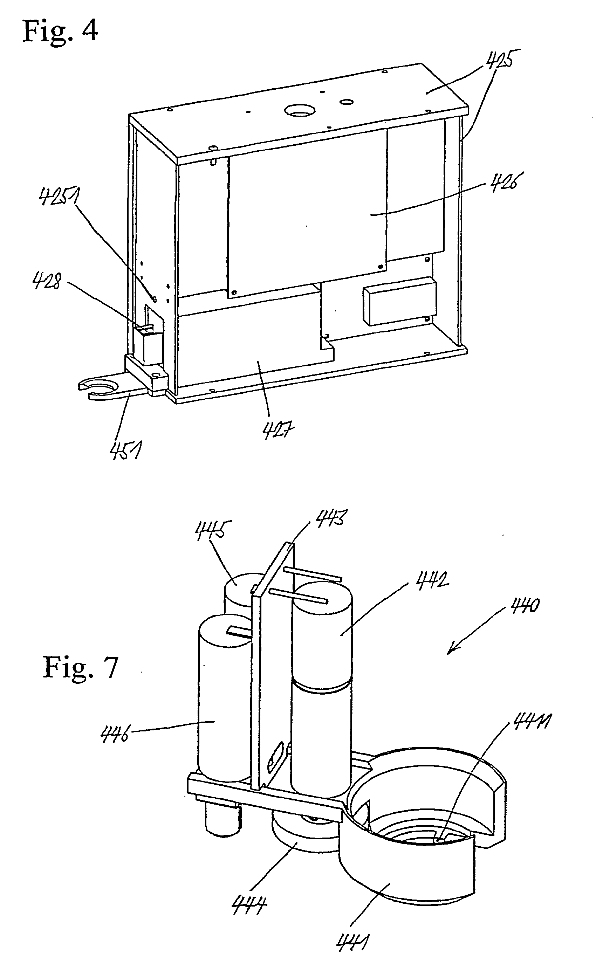

Die Wägeeinheit 420 umfasst ein Gehäuse 425, in dem eine Steuerelektronik 426 und eine Waage 427 angeordnet sind. Vorzugsweise wird eine Waage mit einer Genauigkeit von 0,1 mg verwendet. Wie in Fig. 4 ersichtlich, ragt ein Auflageteil 428 der Waage 427 aus dem Gehäuse 425 heraus. Eine Dosiereinheit 430 liegt über eine Antriebseinheit 440 auf dem Auflageteil 428 auf und wird so zusammen mit der Antriebseinheit 440 von der Waage 427 gewogen.

Zur Erhöhung der Wägegenauigkeit kann neben der Waage 427 eine zweite Waage eingesetzt werden, die den Einfluss von allfälligen Vibrationen misst, welcher dann vom Messresultat der Waage 427 subtrahiert wird.

Unterhalb der Dosiereinheit 430 ist ein Einfüllstutzen 450 von einem fest mit dem Gehäuse 425 verbundenen Halter 451 abnehmbar gehalten. Der Einfüllstutzen 450 berührt die Dosiereinheit 430 nicht und beeinträchtigt somit die Wägung nicht. Durch seine Trennung von der Dosiereinheit 430 wird die Waage 427 mit einem geringeren Gewicht belastet, wodurch die Wägegenauigkeit erhöht wird. Ausserdem können die Dosiereinheit 430 und der Einfüllstutzen 450 separat von der Antriebseinheit 440 bzw. dem Halter 451 entfernt und gelagert werden.

Alternativ könnte auch ein mit der Dosiereinheit 430 verbundener Einfüllstutzen verwendet werden, was den Vorteil hätte, dass im Einfüllstutzen hängengebliebene Restsubstanz mitgewogen würde.

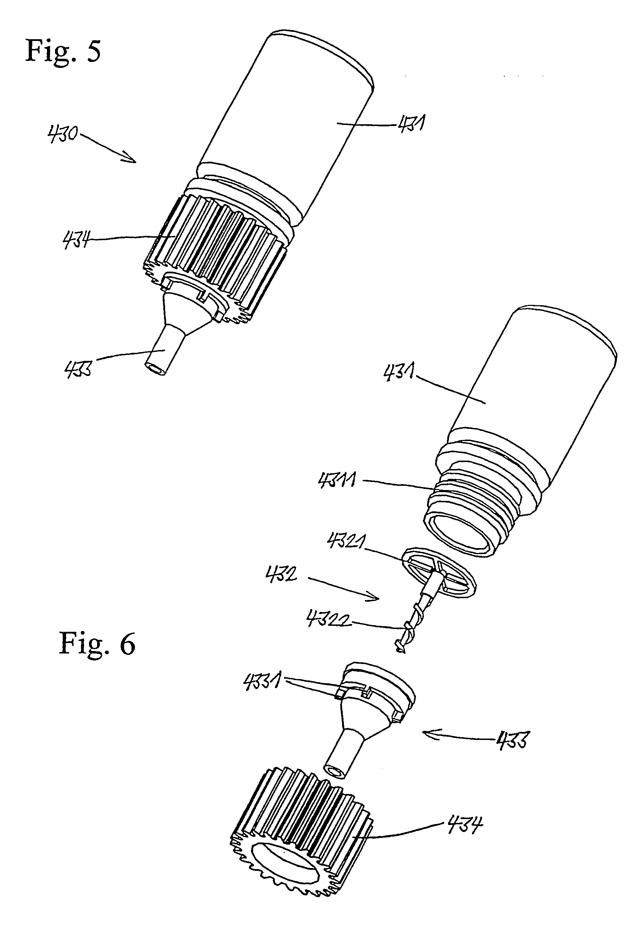

Der Aufbau der Dosiereinheit 430 ergibt sich aus den Fig. 5 und 6. Die Dosiereinheit 430 umfasst einen Vorratsbehälter 431, einen Extruder 432 mit einem Schneckenteil 4322 und einem Stegteil 4321, einen Dosiertrichter 433 und einen mit einer Verzahnung versehenen Deckel 434. Das Schneckenteil 4322 verjüngt sich von oben nach unten, d.h. vom Stegteil 4321 weg, was bewirkt, dass beim Dosieren von pulverförmiger Substanz diese beim Durchgang durch den Dosiertrichter 433 nicht verhockt. Der verzahnte Deckel 434 weist ein Innengewinde auf und wird auf ein Gewinde 4311 des Vorratsbehälters 431 geschraubt, wobei der Extruder 432 zwischen Deckel 434 und Vorratsbehälter 431 eingeklemmt wird. Das Einklemmen erfolgt über das Stegteil 4321, von dem sich ausserdem vorzugsweise in Fig. 6 nicht eingezeichnete Abstreifer in Richtung Schneckenteil 4322 erstrecken. Der Dosiertrichter 433 wird zwischen Deckel 434 und Extruder 432 drehbar gehalten und weist Nocken 4331 auf, die bei in der Antriebseinheit 440 eingesetzter Dosiereinheit 430 in Ausnehmungen 4411 eines Dosiereinheit-Aufnahmeteils 441 der Antriebseinheit 440 eingreifen.

Die Antriebseinheit 440 umfasst ausserdem einen auf einer mit Steuerelektronik versehenen Platine 443 befestigten Motor 442, der ein Getriebezahnrad 444 betätigt. Das Getriebezahnrad 444 greift durch eine Lücke im Dosiereinheit-Aufnahmeteil 441 hindurch in den verzahnten Deckel 434 der Dosiereinheit 430 ein und dreht diesen zusammen mit dem Vorratsbehälter 431 und dem Extruder 432, während der Dosiertrichter 433 durch die in die Ausnehmungen 4411 eingreifenden Nocken 4331 festgehalten wird. Durch die so entstehende Relativbewegung zwischen Dosiertrichter 433 und Extruder 432 wird Substanz aus dem Vorratsbehälter 431 durch den Dosiertrichter 433 hindurch in den Einfüllstutzen 450 gefördert.

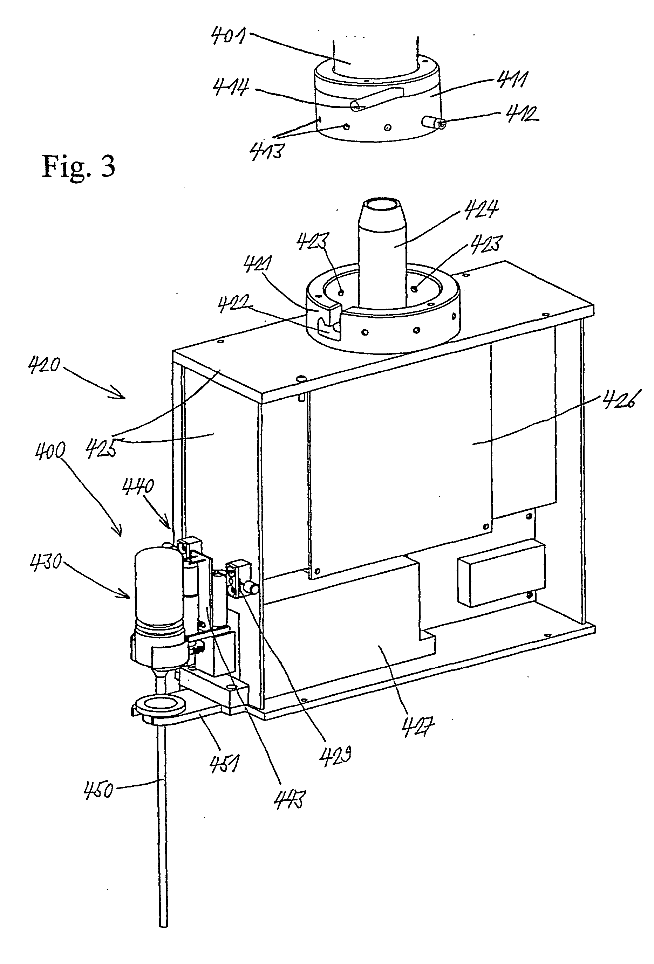

Der Motor 442 wird durch zwei Akkus 445 und 446 gespiesen, die beispielsweise durch die in Fig. 3 eingezeichnete, am Gehäuse 425 angebrachte Ladeeinrichtung 429 aufladbar sind. Die Ladeeinrichtung 429 ist als Schalter ausgebildet und steht nur während des Ladens der Akkus 445, 446 mit diesen in Kontakt. Während des Wägens berührt die Ladeeinrichtung 429 die Akkus 445, 446 nicht, so dass die Wägung nicht beeinträchtigt wird.

Alternativ könnte das Laden der Akkus 445, 446 auch in einer separaten, von der Wägeeinheit 420 getrennten Ladestation erfolgen, wobei hierzu die Antriebseinheit 440 einfach vom Auflageteil 428 der Waage 427 abgehoben und zur Ladestation transportiert werden müsste.

Die Steuerung des Motors 442 erfolgt über die Platine 443, die ihrerseits Steuersignale von der in der Wägeeinheit angeordneten Steuerelektronik 426 empfängt. Die Signalübertragung von der Wägeeinheit zur Platine 443 erfolgt mittels Licht durch eine in Fig. 4 sichtbare Öffnung 4251 im Gehäuse 425, so dass ein mechanischer Kontakt zwischen Wägeeinheit und Antriebseinheit 440 vermieden und die Wägung nicht beeinträchtigt wird.

Die Wägeeinheit 420 und die Dosiereinrichtung 400 können auf verschiedene Arten abgeändert werden. Insbesondere kann beispielsweise der Vorratsbehälter 431 so fixiert werden, dass er beim Dosieren nicht mitdreht. Vorzugsweise erstreckt sich dann vom sich drehenden Extruder 432 aus auch ein Mitnehmer in den Vorratsbehälter 431 hinein.

Das Dosieren kann allgemein kontinuierlich erfolgen, möglich sind aber auch periodische Substanzzugaben und ein Wägen zwischen den einzelnen Zugaben. Ausserdem ist ein Schütteln des Vorratsbehälters 431 während des Dosierens denkbar, so dass die darin enthaltene pulverförmige Substanz gelockert wird.

Zu der vorbeschriebenen erfindungsgemässen Vorrichtung sind weitere konstruktive Variationen realisierbar. Hier ausdrücklich erwähnt sei noch, dass anstelle einer Dosiereinrichtung 400 zur Dosierung von pulverförmiger Substanz eine Einrichtung zur Dosierung von Flüssigkeit an der Wägeeinheit 420 angebracht sein könnte.

## Patentansprüche

1. Vorrichtung mit einer Dosiereinrichtung (400) zum dosierten Abgeben einer Substanz und mit einer Waage (427), mit der die Menge an abgegebener Substanz ermittelbar ist, wobei die Dosiereinrichtung (400) einen abzugebende Substanz enthaltenden Vorratsbehälter (431), eine den Vorratsbehälter (431) umfassende Dosiereinheit (430) und eine Antriebseinheit (440) umfasst und an der Waage (427) angeordnet ist, so dass die Waage (427) das Gewicht der Dosiereinrichtung (400) misst, **dadurch gekennzeichnet, dass** die Dosiereinheit (430) ohne Schrauben zu lösen von der Antriebseinheit (440) abnehmbar und wieder an diese anbringbar ist oder der Vorratsbehälter (431) so angeordnet ist, dass er ohne Schrauben zu lösen vom Rest der Dosiereinrichtung (400) abnehmbar und wieder an diesen anbringbar ist.

2. Vorrichtung nach Anspruch 1, **dadurch gekennzeichnet, dass** die Dosiereinrichtung (400) die abzugebende Substanz vollständig mit sich mitführt.

3. Vorrichtung nach Anspruch 1 oder 2, **dadurch gekennzeichnet, dass** die Dosiereinrichtung (400) so an der Waage (427) angeordnet ist, dass die Dosiereinrichtung (400) ohne Schrauben zu lösen von der Waage (427) abnehmbar und wieder an diese anbringbar ist, insbesondere durch Abheben und wieder Aufsetzen.

4. Vorrichtung nach einem der Ansprüche 1 bis 3, **dadurch gekennzeichnet, dass** die Dosiereinheit (430) durch Abheben und wieder Aufsetzen von der Antriebseinheit (440) abnehmbar und wieder an diese anbringbar ist.

5. Vorrichtung nach einem der Ansprüche 1 bis 4, **dadurch gekennzeichnet, dass** der Vorratsbehälter (431) durch Abheben und wieder Aufsetzen vom Rest der Dosiereinrichtung (400) abnehmbar und wieder an diesen anbringbar ist.

6. Vorrichtung nach einem der Ansprüche 1 bis 5, **dadurch gekennzeichnet, dass** die Dosiereinrichtung (400) eine Einrichtung zur Dosierung von Flüssigkeit ist.

7. Vorrichtung nach einem der Ansprüche 1 bis 6, **dadurch gekennzeichnet, dass** die Dosiereinrichtung (400) eine Einrichtung zur Dosierung von pulverförmiger Substanz ist.

8. Vorrichtung nach Anspruch 7, **dadurch gekennzeichnet, dass** die Dosiereinrichtung (400) einen Extruder (432) aufweist, insbesondere einen Extruder (432) mit einem Schneckenteil (4322).

9. Vorrichtung nach einem der Ansprüche 1 bis 8, **dadurch gekennzeichnet, dass** die Dosiereinrichtung (400) einen Motor (442) und mindestens einen Akku (445, 446) zur Speisung des Motors (442) aufweist.

## Claims

1. Apparatus having a dosing arrangement (400) for dispensing a substance in dosed form, and having a balance (427) by means of which it is possible to determine the quantity of substance dispensed, the dosing arrangement (400) comprising a supply container (431) containing a substance which is to be dispensed, a dosing unit (430) comprising the supply container (431), and a drive unit (440) and being arranged on the balance (427) such that the balance (427) measures the weight of the dosing arrangement (400), **characterized in that** the dosing unit (430) can be removed from the drive unit (440), and refitted thereon, without screws being released, or the supply container (431) is arranged such that it can be removed from the rest of the dosing arrangement (400), and refitted thereon, without screws being released.

2. Apparatus according to claim 1, **characterized in that** the dosing arrangement (400) carries along all the substance which is to be dispensed.

3. Apparatus according to claim 1 or 2, **characterized in that** the dosing arrangement (400) is arranged on the balance (427) such that the dosing arrangement (400) can be removed from the balance (427), and refitted thereon, without screws being released, in particular by virtue of being lifted off and placed in position again.

4. Apparatus according to any one of claims 1 to 3, **characterized in that** the dosing unit (430) can be removed from the drive unit (440), and refitted thereon, by virtue of being lifted off and placed in position again.

5. Apparatus according to any one of claims 1 to 4, **characterized in that** the supply container (431) can be removed from the rest of the dosing arrangement (400), and refitted thereon, by virtue of being lifted off and placed in position again.

6. Apparatus according to any one of claims 1 to 5, **characterized in that** the dosing arrangement (400) is an arrangement for dosing liquid.

7. Apparatus according to any one of claims 1 to 6, **characterized in that** the dosing arrangement (400) is an arrangement for dosing pulverulent substance.

8. Apparatus according to claim 7, **characterized in that** the dosing arrangement (400) has an extruder (432), in particular an extruder (432) with a screw part (4322).

9. Apparatus according to any one of claims 1 to 8, **characterized in that** the dosing arrangement (400) has a motor (442) and at least one storage battery (445, 446) for supplying power to the motor (442).

## Revendications

1. Dispositif comportant un système de dosage (400) destiné à la distribution dosée d'une substance et comportant une balance (427) permettant de déterminer la quantité de la substance distribuée, dans lequel le système de dosage (400) comprend un réservoir (431) contenant la substance à distribuer, une unité de dosage (430) comprenant le réservoir (431), et une unité d'entraînement (440) et est agencé sur la balance (427) de telle sorte que la balance (427) mesure le poids du système de dosage (400), **caractérisé en ce que** l'unité de dosage (430) est susceptible d'être démontée de l'unité d'entraînement (440) et d'être remontée sur celle-ci, sans desserrer des vis, ou **en ce que** le réservoir (431) est agencé de manière à pouvoir être démonté du reste du système de dosage (400) et être remonté sur celui-ci, sans desserrer des vis.

2. Dispositif selon la revendication 1, **caractérisé en ce que** le système de dosage (400) entraîne avec lui l'ensemble de la substance à distribuer.

3. Dispositif selon la revendication 1 ou 2, **caractérisé en ce que** le système de dosage (400) est agencé sur la balance (427) de telle sorte que le système de dosage (400) est susceptible d'être démonté de la balance (427) et d'être remonté sur celle-ci, sans desserrer des vis, en particulier par relèvement et remise en place.

4. Dispositif selon l'une des revendications 1 à 3, **caractérisé en ce que** l'unité de dosage (430) est susceptible d'être démontée de l'unité d'entraînement (440) et d'être remontée sur celle-ci par relèvement et remise en place.

5. Dispositif selon l'une des revendications 1 à 4, **caractérisé en ce que** le réservoir (431) est susceptible d'être démonté du reste du système de dosage (400) et d'être remonté sur celui-ci par relèvement et remise en place.

6. Dispositif selon l'une des revendications 1 à 5, **caractérisé en ce que** le système de dosage (400) est un système destiné au dosage de liquides.

7. Dispositif selon l'une des revendications 1 à 6, **caractérisé en ce que** le système de dosage (400) est un système destiné au dosage d'une substance en poudre.

8. Dispositif selon la revendication 7, **caractérisé en ce que** le système de dosage (400) comprend une extrudeuse (432), en particulier une extrudeuse (432) pourvue d'un élément formant vis (4322).

9. Dispositif selon l'une des revendications 1 à 8, **caractérisé en ce que** le système de dosage (400) comprend un moteur (442) et au moins un accumulateur (445, 446) pour alimenter le moteur (442).
